# EUROPEAN PATENT SPECIFICATION

(11) **EP 0 708 229 B1**
(45) Date of publication and mention of the grant of the patent: **07.07.1999**
(21) Application number: 95830427.1
(22) Date of filing: 12.10.1995
(51) Int. Cl.: F01L 3/24, B23P 19/00, B23P 19/04

(54) **Device for automated insertion of the valves of an internal combustion engine within respective valve seats in the engine**
Vorrichtung zur automatischen Bestückung der Ventile einer Brennkraftmaschine in ihren betreffenden Ventilsitzen
Dispositif d'insertion automatisé des soupapes d'un moteur à combustion interne dans leurs sièges respectifs

(30) Priority: 17.10.1994 IT TO940820
(43) Date of publication of application: 24.04.1996
(73) Proprietor: COMAU S.p.A., 10095 Grugliasco (Torino) (IT)
(72) Inventor: Leonarduzzi, Valter, I-10076 Caselle (IT)
(74) Representative: Notaro, Giancarlo

(56) References cited:
- US-A- 1 843 022
- US-A- 4 879 795
- PATENT ABSTRACTS OF JAPAN vol. 12, no. 466 (M-772), 7 December 1988 & JP-A-63 191528 (HONDA), 9 August 1988,
- SOVIET INVENTIONS ILLUSTRATED Section PQ, Week 7926 8 August 1979 Derwent Publications Ltd., London, GB; Class P56, AN F6375B XP002018496 & SU-A-621 528 (MASHAI) , 1 August 1978
- PATENT ABSTRACTS OF JAPAN vol. 18, no. 633 (M-1714), 2 December 1994 & JP-A-06 246558 (MITSUBISHI), 6 September 1994,

## Description

The present invention relates to devices for automated insertion of the valves of an internal combustion engine within respective valve seats in the engine.

The object of the present invention is that of providing a device of the above indicated type which is able to assemble in a single cycle of operations all the valves which are necessary for any types of engine (i.e. with any number of cylinders, with any number of valves for each cylinder, and any spacing between the cylinders and between the valves of each cylinder.

A further object of the invention is that of providing a device of the above indicated type which can be used both for picking up the valves from a kit and for carrying out the insertion operations.

In order to achieve the above indicated objects, the present invention provides a device of the above indicated type, characterized in that it comprises:
- a plurality of valve gripping members,
- a plurality of sliding members each carrying a respective gripping member, which are slidably mounted along the same direction on a support structure,
- first control means, for adjusting the spacing between respective groups of said sliding members, which are to insert the valves in respective engine cylinders, as a function of the spacing between the engine cylinders, and
- second control means, for simultaneously adjusting the spacing between the sliding members of each group associated with a given cylinder, as a function of the spacing of the valve seats of each cylinder,
- wherein said first and second control means are able to control the position along said sliding direction, with respect to said support structure, of a first and second aligned series of sliding members alternated to each other,
- wherein the sliding members of the first series comprise a first sliding member at one end of the series which is fixed to said support structure, a second sliding member at the opposite end of the series which is driven by said control means, and one or more intermediate sliding members connected to each other as well as to said first and second sliding member by means of a pantograph linkage, so that each movement of said second sliding member causes said intermediate sliding members to be positioned at uniform intervals between said first and second sliding member, and
- wherein each sliding member of the second series is associated to a respective sliding member of the first series by a linkage which enables the spacing between this two sliding members to be adjusted; said second control means being adapted to control simultaneously all of said linkages associated to the sliding members of the second series.

Due to the above indicated features, the device according to the invention is able to be adapted, by actuating said first and second control means, to engines having a different number of cylinders, different spacings between the cylinders and different spacings between the valves of each cylinder.

In a preferred embodiment, said second sliding member of said first series of sliding members carries a nut and said first control means comprises an electric motor and a screw engaged within said nut and driven by said electric motor, to cause a movement of said second sliding member with respect to the support structure, said pantograph linkage comprising a plurality of rocker levers pivotally mounted on said intermediate sliding members of the first series and having free ends pivoted to each other, according to a zigzag arrangement.

Also in said preferred embodiment, each sliding member of the second series is connected to a corresponding sliding member of the first series by means of two levers pivoted at one end to said sliding members and at the opposite end to a common driving element movable in a direction orthogonal to the sliding direction of the sliding members, said second control means comprising a structure which is slidably mounted along said orthogonal direction on said support structure and rigidly connected to said driving element of each of said pairs of sliding members; said second control means further comprising an electric motor which controls said sliding structure by means of a screw-and-nut arrangement.

Due to said further features, the system according to the invention is able to perform all the adjustments by using only two electric motors, the first of which is actuated as a function of the spacing between the cylinders of the engine and the second of which is able to control simultaneously the adjustment of the various groups of sliding members as a function of the spacing between the valves of the various cylinders.

Further features and advantages of the invention will become apparent from the description which follows with reference to the annexed drawings, given purely by way of non limiting example, in which:
figure 1 is a diagrammatic elevational view of a device according to the invention,
figure 2 is a view according to arrow II of figure 1,
figure 3 is a view according to arrow III of figure 1,
figure 4 is a cross-sectional view taken along line IV-IV of figure 1, this line being indicated also in figure 6,
figure 5 is a cross-sectional view taken along line V-V of figure 4, this line being indicated also in figure 6,
figure 6 is a cross-sectional view taken along line VI-VI of figure 4,
figure 7 is a cross-sectional view taken along line VII-VII of figure 6,
figure 8 is a cross-sectional view taken along line VIII-VIII of figure 4, this line being indicated also in figure 5,
figure 9 is a cross-sectional view taken along line IX-IX of figure 4, this line being indicated also in figure 5,
figure 10 is a cross-sectional view taken along line X-X of figure 5, this line being indicated also in figure 6, and
figure 11 is a cross-sectional view taken along line XI-XI of figure 4.

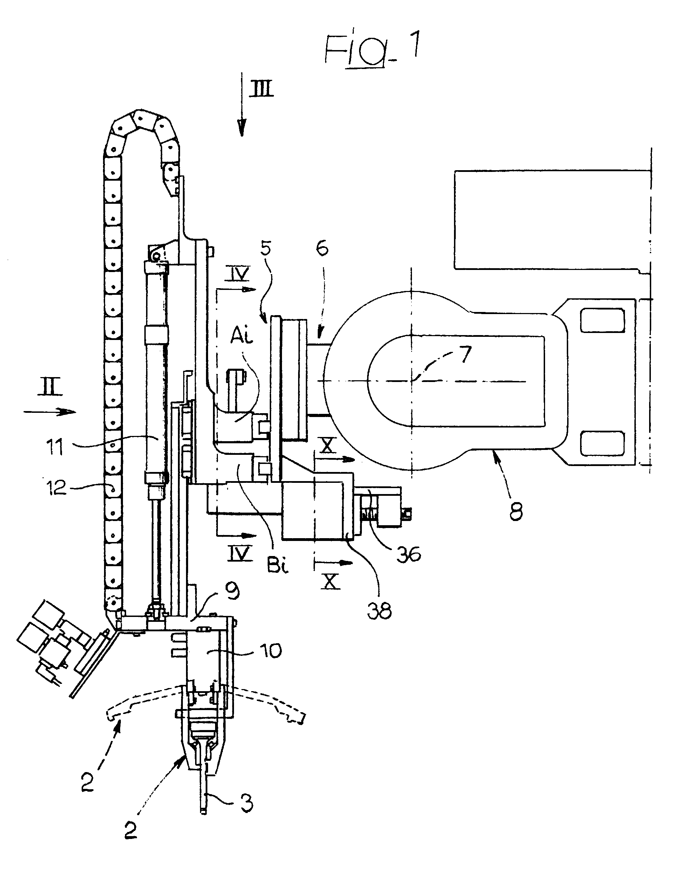

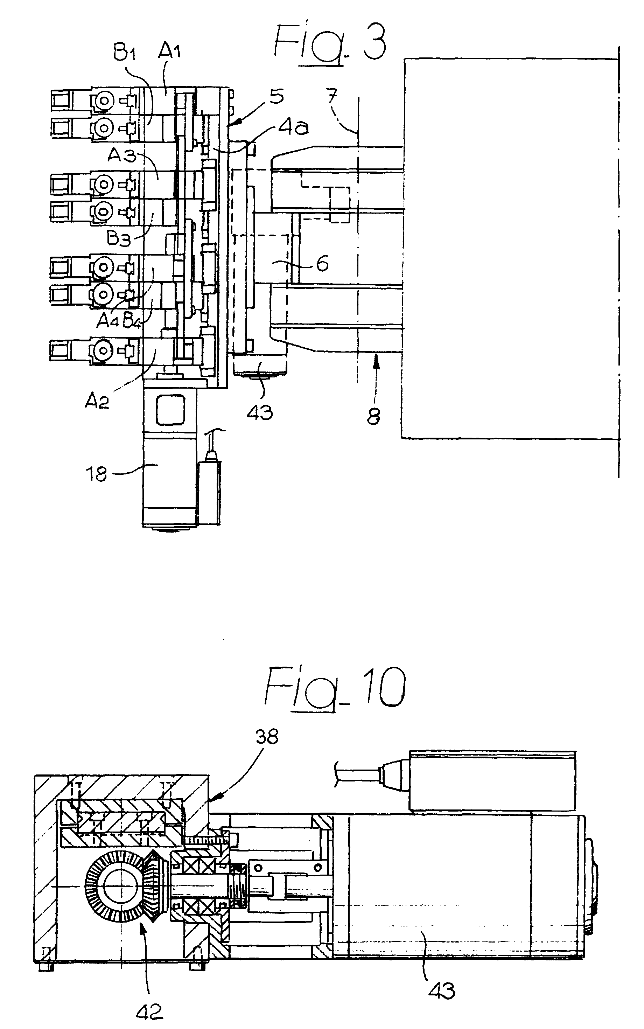

With reference to figures 1-3, numeral 1 generally designates a device according to the invention for automatically inserting the valves of an internal combustion engine within the corresponding valve seats in the engine.

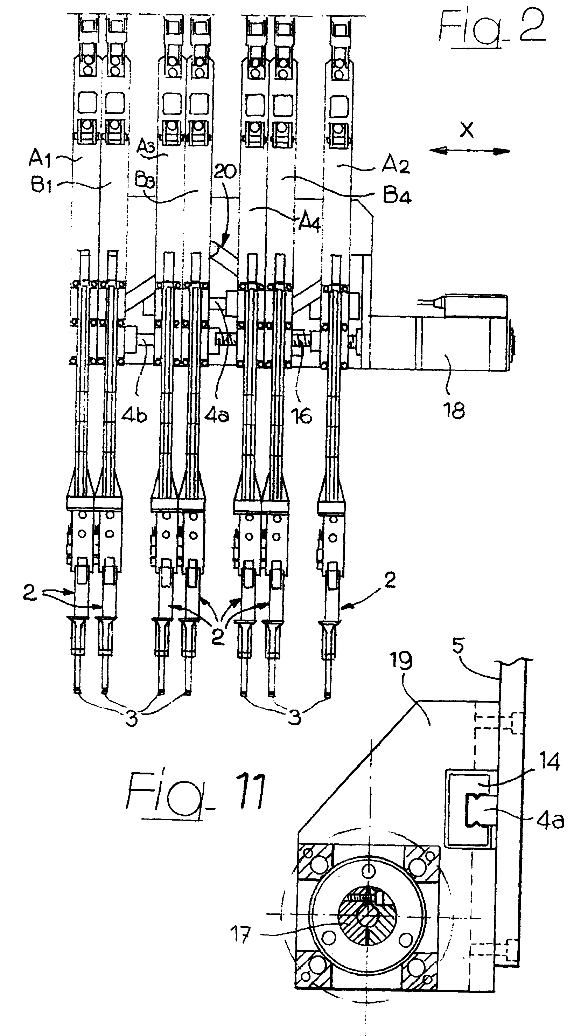

The device comprises a plurality of gripping members 2 for gripping valves 3. Gripping members 2 are carried by a plurality of sliding members A1, A2, A3, A4 and B1, B3, B4 which will be described more in detail below. Said sliding members are slidably mounted along a direction X on two linear guides 4, 4a parallel to each other carried by a plate 5 forming part of a supporting structure 6 which on its turn is mounted so as to be adjustable around an axis 7 on a frame 8 (figures 1 and 2).

Each of the above mentioned sliding members carries a structure 9 which has on board the actuator 10 of the gripping member 2 and is vertically movable (with reference to figure 1) with respect to the respective sliding members by a control jack 11. Reference numeral 12 designates the chain for guiding the supply cables of actuator 10, which is able to drive movement of the jaws of gripping member 2 between the closed position shown with undotted line in figure 1, and the opened position shown with dotted line in the same figure.

In the following description and in the annexed drawings, the details of construction relating to gripping member 2, actuator 10 and the members which connect structure 9 to the respective sliding member are not shown, since said components may be made in any known way and do not fall, taken alone, within the scope of the present invention. Furthermore, the deletion of these details from the drawings renders the latter easier to understand. The same applies to the details of construction of frame 8, structure 6 and the way by which the structure is mounted on frame 8. The same also applies to what relates to the electronic control system of all the movable parts of the device, which naturally are moved automatically according to a programmed cycle of operations as a function of the particular type of engine on which the device must operate.

The description which follows relates instead in particular to the way by which the adjustment is obtained of the position of said sliding members A1, A2, A3, A4 and B1, B3, B4 as a function of the features of the engine on which one must operate (number of cylinders, spacing between the cylinders, number and spacings of the valves of each cylinder).

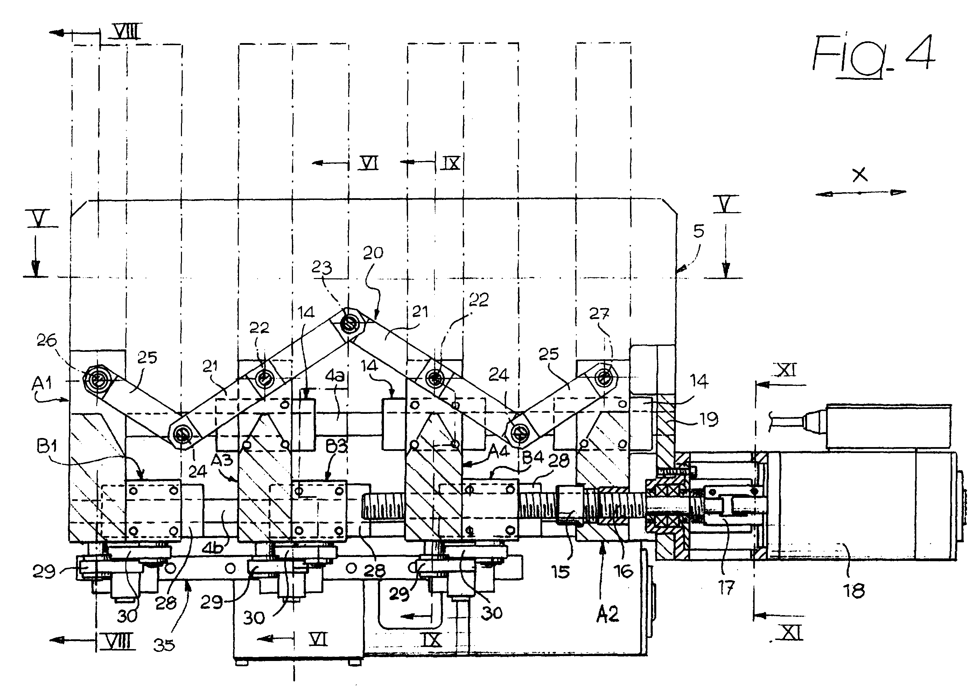

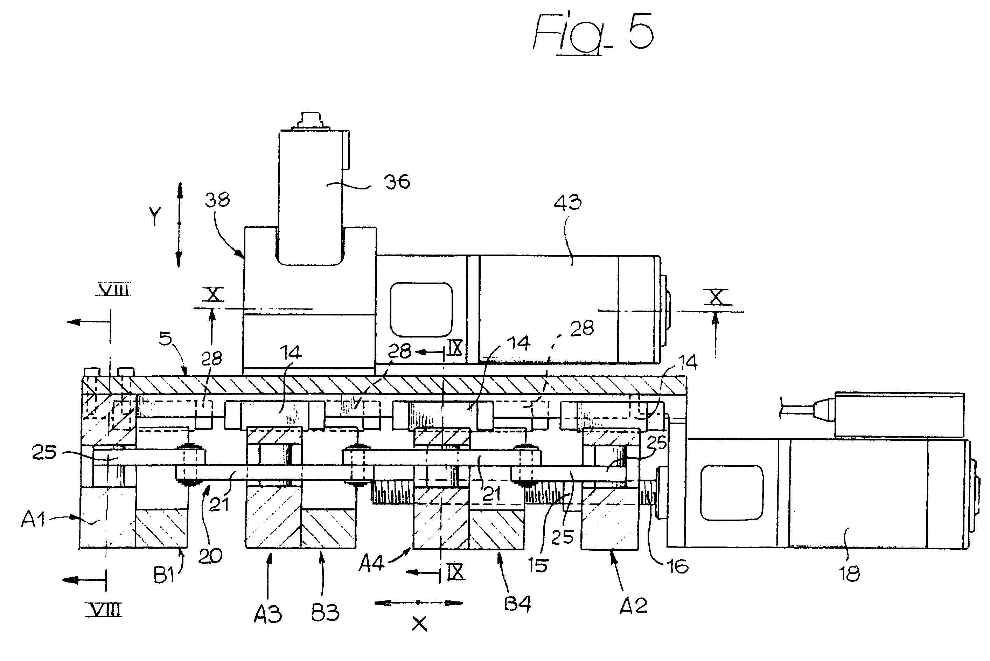

With reference in particular to figures 4-11, on the support plate 5 there are mounted a first series of sliding members (see in particular figures 4, 5) A1, A2, A3 and A4 and a second series of sliding members B1, B3, B4. In the illustrated example, the sliding members of the first series are four and the sliding members of the second series are three (for which reason there is no sliding member called B2 coupled to sliding member A2).

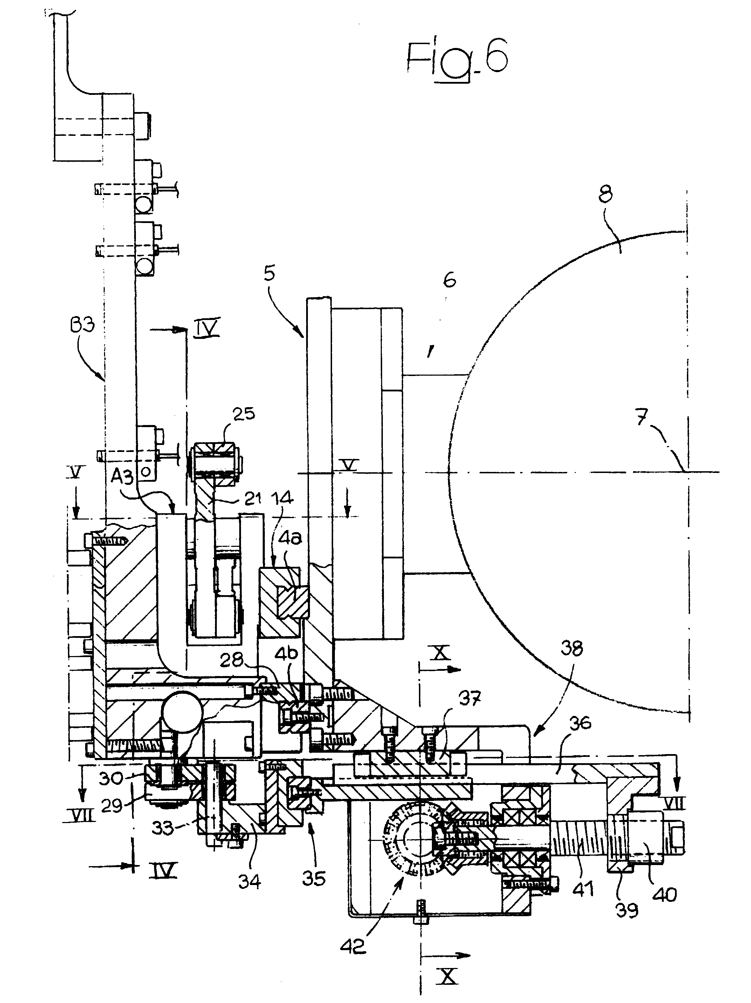

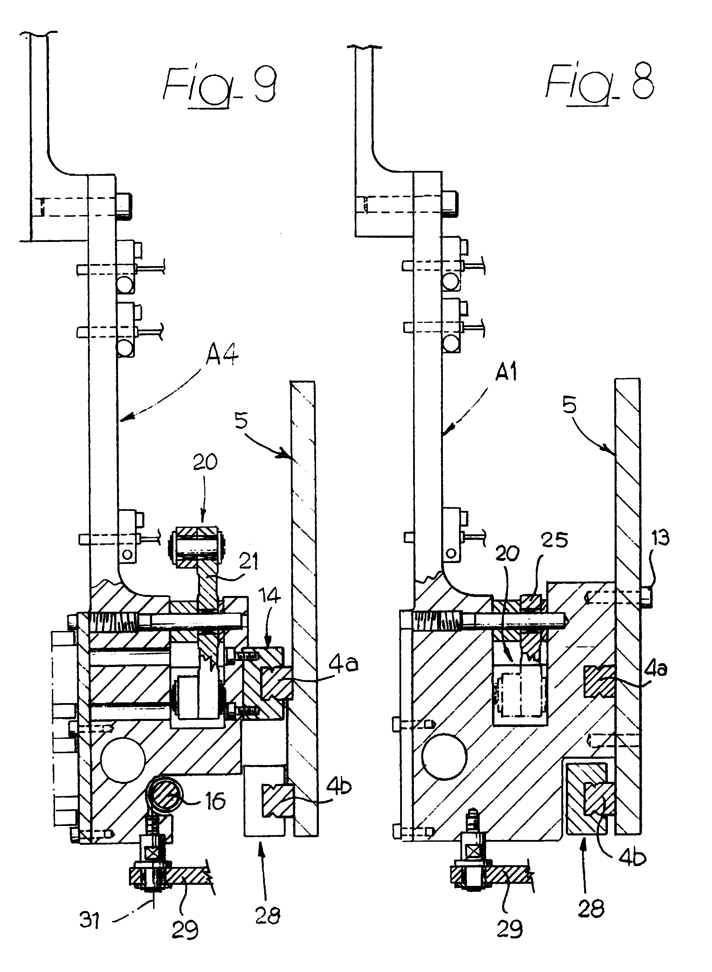

The first sliding member A1 of the first series (shown at the left end of figures 4, 5, as well as in figure 8 where it is shown in cross section taken along line VIII-VIII of figures 4, 5) is rigidly connected to plate 5 by screws 13 (figure 8). The remaining sliding members A2, A3 and A4 of said first series are provided on their side facing plate 5 (see also figure 9, which shows sliding member A4 in cross section) with respective C-shaped skids 14 which are slidably mounted on said guide 4a which, similarly to guide 4b, is screwed to plate 5 (figure 6 shows a fixing screw for guide 4b).

As it has been already indicated, a first sliding member A1 arranged at one end of said first series of sliding members is rigidly connected to plate 5. Sliding member A2 arranged at the opposite end of said first series is instead slidably mounted, as sliding members A3, A4, on guide 4a of plate 5 and carries a nut 15 engaged by a screw 16 which is driven through a coupling 17 (see also figure 11) by a first electric motor 18 whose body is supported by a bracket 19 (figure 4) rigidly connected to plate 5. As shown in figure 9, which shows sliding member A4, and in figure 6, which shows sliding member B3, the remaining sliding members have holes or cavities adapted to avoid any interference with screw 16, which only engages nut 15 carried by the end sliding member A2.

Between the two end sliding members A1, A2, the first series of sliding members comprises two intermediate sliding members A3, A4 which are also provided each with a skid 14 slidably mounted on guide 4a and are connected to each other, as well as to sliding members A1, A2 by a pantograph linkage generally designated by 20 in figure 4. The pantograph linkage 20 comprises two rocker levers 21 pivoted at 22 to the two sliding members A3, A4 and mutually articulated at 23. At the opposite ends, the two rocker levers 21 are pivoted at 24 to two further levers 25 which are articulated at 26, 27 respectively to sliding member A1 and sliding member A2, so that said levers define a general zigzag arrangement corresponding to a so called simple pantograph or half-pantograph. As a result of the connection formed by the pantograph linkage 20, each movement of the end sliding member A2 along guide 4a, with respect to the fixed sliding member A1 arranged at the opposite end, causes automatically a positioning of sliding members A3, A4 at uniform intervals. Naturally, each position of each of said sliding members corresponds to a position, in the direction parallel to that of guide 4a, of the respective gripping member of the valve. The electric motor 18 is therefore actuated to adjust the spacing of sliding members A1, A3, A4, A2 as a function of the spacing between the various cylinders of the engine on which the device must operate.

As it has been already indicated, the device comprises also a second series of sliding members B1, B3, B4, respectively coupled to sliding members A1, A3, A4, each couple of sliding members carrying the gripping members for the valves associated to a same cylinder of the engine.

Once the position along sliding direction X of the sliding members of the first series has been reached, each sliding member of the second series B1, B3, B4 must be adjusted in position with respect to the respective sliding member of the first series as a function of the spacing of the seats associated with each cylinder of the engine on which the device must operate. To this end, as already indicated, sliding members B1, B3, B4 of the second series are slidably mounted on a guide 4b parallel to guide 4a and fixed to plate 5 (see also figure 6). Each of the sliding members B1, B3, B4 of the second series (see figures 4, 5, as well as figure 6 which shows sliding members B3 in cross section, taken along line VI-VI of figures 4, 5) is provided on its side which faces plate 5 with a C-shaped skid 28 slidably mounted on guide 4b.

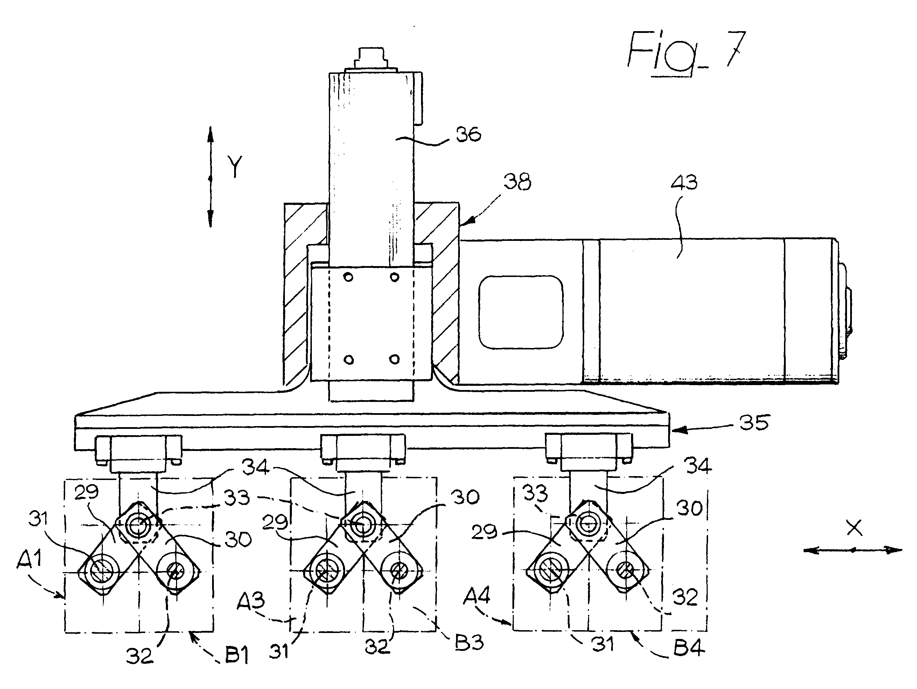

With reference now in particular to figures 4, 6 and 7, the two sliding members of each pair of sliding members A1, B1; A3, B3 and A4, B4 are connected to each other by two levers 29, 30 having ends pivoted at 31, 32 to the two sliding members of the pair and the opposite ends both pivoted at 33 to a respective control element 34 (figure 7). Control elements 34 are all connected to a common structure 35 which is slidably mounted on plate 5 along a direction Y orthogonal to the sliding direction X of the sliding members. More in detail, with reference to figure 6, as well as to figure 10, said structure 35 comprises a plate 36 slidably mounted in a guide 37 fixed to a bracket 38 which is on its turn fixed to plate 5. Plate 36 (figure 6) carries at one end an appendage 39 having a nut 40 which is engaged by a screw 41 rotatably mounted within bracket 38. Screw 41 is driven through a bevel gear 42 by a second electric motor 43 (figure 10) which is supported by bracket 38.

Therefore, by actuating a motor 43, rotation of screw 41 is caused and a resulting movement of plate 36 in the direction indicated by Y in figure 6 and in figure 7 is obtained. Since the plane containing axes 31, 32 (figure 7) is at a fixed distance from the support structure 5 (since sliding members Ai, Bi can move only along direction X) a change in the position of structure 35 along direction Y causes a widening or narrowing of the V shape formed by the pairs of levers 29, 30, with a resulting movement of the sliding members of each pair A1, B1; A3, B3 and A4, B4 along the direction of arrows B (figure 7) towards or away from each other.

Summing up, the first motor 18 is able to position simultaneously the sliding members of the first series as a function of the spacing between the cylinders of the engine (the sliding members of the second series follow the sliding members of the first series in their movement during this stage), whereas the second motor 43 is able to simultaneously position each of the sliding members of the second series with respect to the sliding member of the first series to which it is coupled, as a function of the spacing between the valve seats associated with each cylinder of the engine.

Merely by way of example, the annexed drawings show a case in which there are provided four sliding members of the first series and three sliding members of the second series. With this configuration, it is obviously possible to operate on an engine having not more than four cylinders in line (for example an in-line four cylinder engine, a V eight cylinder engine or a V six cylinder engine). Furthermore, the example relates to the case in which one of the four sliding members of the first series is not provided with a corresponding sliding member of the second series, which indicates that in the case of the application to an engine having four cylinders in line, the device is able to insert a single valve for each cylinder. However it is obviously possible that the number and the way of coupling the sliding members of the first series and the second series be varied according to the requirements and the types of application.

Naturally, also, while the principle of the invention remains the same, the details of construction and the embodiments may widely vary with respect to what has been described and illustrated purely by way of example, without departing from the scope of the present invention.

## Claims

1. Device for automated insertion of valves (3) of an internal combustion engine within respective valve seats in the engine, characterized in that it comprises:
- a plurality of valve gripping members (2),
- a plurality of sliding members (Ai, Bi) each carrying a respective gripping member (2), and slidably mounted along a same direction (X) on a support structure (5),
- first control means (18), for adjusting the spacing between respective groups of said sliding members (Ai, Bi), which are adapted to insert the valves (3) in respective cylinders of the engine, as a function of the spacing between the cylinders of the engine, and
- second control means (43), for simultaneously adjusting the spacing between the sliding members of the various groups associated to the various cylinders, as a function of the spacing between the valve seats of each cylinder,
- wherein said first and second control means (18, 43) are able to control the position along said sliding direction (X), with respect to said support structure (5), respectively of a first series (Ai) and second series (Bi) of sliding members which are aligned and alternated with each other,
- wherein the sliding members (Ai) of the first series comprise a first sliding member (A1) at one end of the series which is fixed to said support structure (5), a second sliding member (A2) at the opposite end of the series which is controlled by said control means (18), and one or more intermediate sliding members (A3, A4) connected to each other, as well as to said first and second sliding members (A1, A2) by means of a pantograph linkage (20), so that each movement of said second sliding member (A2) causes said intermediate sliding members (A3, A4) to be positioned at uniform intervals between said first and second sliding members (A1, A2), and
- wherein each sliding member (Bi) of the second series is associated to a respective sliding member (Ai) of the first series by a linkage (29, 30) for adjusting the spacing between this two sliding members (Ai, Bi); said second control means (43) being adapted to control simultaneously said linkages (29, 30) associated to all of said sliding members (Bi) of the second series.

2. Device according to claim 1, characterized in that said second sliding member (A2) of said first series of sliding members (Ai) carries a nut (15) and said first control means comprises an electric motor (18) and a screw (16) engaged within said nut (15) and driven by said electric motor (18) to cause a movement of said second sliding member (A2) with respect to the support structure (5), said pantograph linkage (20) comprising a plurality of rocker levers (21) pivotally mounted on said intermediate sliding members (A3, A4) of the first series and having free ends articulated to each other, according to a zigzag arrangement.

3. Device according to claim 1, characterized in that each sliding member (Bi) of the second series is connected to a corresponding sliding member (Ai) of the first series by two levers (29, 30) articulated at one end to said sliding member (Ai, Bi) at the other end to a common control element (34) movable in a direction (Y) orthogonal to the sliding direction (X) of said sliding members, said second control means comprising a structure (36) slidably mounted along said orthogonal direction (Y) on said support structure (5) and rigidly connected to said control element (34) of each of said pairs of sliding members (Ai, Bi) and an electric motor (43) for controlling said sliding structure (36) by a screw-and-nut system (40, 41).

4. Device according to claim 1, characterized in that the sliding members of the first and second series (Ai, Bi) are provided with C-shaped skids (14, 28) slidably mounted on two separate guides 4a, 4b fixed to said support structure (5).

## Patentansprüche

1. Vorrichtung zur automatischen Bestückung der Ventile einer Brennkraftmaschine in ihren betreffenden Ventilsitzen in der Maschine, dadurch gekennzeichnet, daß diese umfaßt:
- eine Mehrzahl von Ventilgreifelementen (2),
- eine Mehrzahl von Gleitelementen (Ai, Bi), wobei jedes ein entsprechendes Greifelement (2) trägt und gleitend entlang einer gleichen Richtung (X) auf einer Tragestruktur (5) aufgebaut ist,
- erste Steuermittel (18) zum Einstellen des Abstands zwischen jeweiligen Gruppen von Gleitelementen (Ai, Bi), welche angepaßt sind, um die Ventile (3) in jeweilige Zylinder der Maschine als eine Funktion des Abstands zwischen den Zylindern der Maschine einzusetzen, und
- zweite Steuermittel (43) zum gleichzeitigen Einstellen des Abstands zwischen den Gleitelementen der verschiedenen Gruppen, welche den verschiedenen Zylindern zugeordnet sind, als Funktion des Abstands zwischen den Ventilsitzen eines jeden Zylinders,
- wobei die ersten und zweiten Steuermittel (18, 43) in der Lage sind, die Position jeweils einer ersten Serie (Ai) und einer zweiten Serie (Bi) von Gleitelementen, welche in Reihe und miteinander abwechselnd angeordnet sind, entlang der Gleitrichtung (X) bezüglich der Tragestruktur (5) zu steuern,
- wobei die Gleitelemente (Ai) der ersten Serie ein erstes Gleitelement (A1) an einem Ende der Serie, welches an der Tragestruktur (5) fixiert ist, ein zweites Gleitelement (A2) an dem gegenüberliegenden Ende der Serie, welches von den Steuereinrichtungen (18) gesteuert wird, und ein oder mehrere dazwischenliegende Gleitelemente (A3, A4), welche sowohl miteinander als auch mit den ersten und zweiten Gleitelementen (A1, A2) durch eine Pantographenverbindung (20) verbunden sind, umfaßen, so daß jede Bewegung des zweiten Gleitelements (A2) die dazwischenliegenden Gleitelemente (A3, A4) veranlaßt, in gleichmäßigen Abständen zwischen den ersten und zweiten Gleitelementen (A1, A2) angeordnet zu sein, und
- wobei jedes Gleitelement (Bi) der zweiten Serie einem entsprechenden Gleitelement (Ai) der ersten Serie durch eine Verbindung (29, 30) zum Einstellen des Abstands zwischen diesen zwei Gleitelementen (Ai, Bi) zugeordnet ist, wobei die zweiten Steuermittel (43) angepaßt sind, um gleichzeitig die allen Gleitelementen der zweiten Serie zugeordneten Verbindungen (29, 30) zu steuern.

2. Vorrichtung gemäß Anspruch 1, dadurch gekennzeichnet, daß das zweite Gleitelement (A2) der ersten Serie von Gleitelementen (Ai) eine Mutter (15) trägt, und die ersten Steuermittel einen elektrischen Motor (18) und eine Schraube (16) umfassen, welche mit der Mutter (15) in Eingriff steht und von dem elektrischen Motor (18) angetrieben wird, um eine Bewegung des zweiten Gleitelements (A2) relativ zu der Tragestruktur (5) zu veranlassen, wobei die Pantographenverbindung (20) eine Mehrzahl von Kulissenhebeln (21) umfaßt, welche schwenkbar an die dazwischenliegenden Gleitelemente (A3, A4) der ersten Serie angebaut sind und welche gemäß einer Zickzack-Anordnung zueinander gelenkige freie Enden aufweisen.

3. Vorrichtung gemäß Anspruch 1, dadurch gekennzeichnet, daß jedes Gleitelement (Bi) der zweiten Serie mit einem korrespondierenden Gleitelement (Ai) der ersten Serie durch zwei Hebel (29, 30) verbunden ist, welche an einem Ende an dem Gleitelement (Ai, Bi) und an dem anderen Ende an einem gemeinsamen Steuerelement (34) in eine Richtung (Y) orthogonal zu der Gleitrichtung (X) der Gleitelemente beweglich angelenkt sind, wobei die zweiten Steuermittel eine Struktur (36), welche gleitend entlang der orthogonalen Richtung (Y) an der Tragestruktur (5) angebaut ist und fest mit dem Steuerelement (34) jedes der Paare der Gleitelemente (Ai, Bi) verbunden ist und einen elektrischen Motor (43) zur Steuerung der gleitenden Struktur (36) durch das Schrauben- und Mutternsystem (40, 41) umfassen.

4. Vorrichtung gemäß Anspruch 1, dadurch gekennzeichnet, daß die Gleitelemente der ersten und zweiten Serie (Ai, Bi) mit C-förmigen Kufen (14, 28) versehen sind, welche gleitend auf zwei getrennten Führungen (4a, 4b), welche an der Tragestruktur (5) fixiert sind, angebaut sind.

## Revendications

1. Dispositif d'insertion automatisée de soupapes (3) d'un moteur à combustion interne à l'intérieur de sièges de soupape respectifs dans le moteur, caractérisé en ce qu'il comprend :
- une pluralité d'éléments de préhension de soupape (2),
- une pluralité d'éléments coulissants (Ai, Bi) portant chacun un élément de préhension respectif (2), qui sont montés de façon coulissante selon la même direction (X) sur une structure de support (5),
- un premier moyen de commande (18), destiné à ajuster l'espacement entre les groupes respectifs desdits éléments coulissants (Ai, Bi), qui doivent insérer les soupapes (3) dans les cylindres du moteur respectifs, en fonction de l'espacement entre les cylindres du moteur, et
- un second moyen de commande (43) destiné à ajuster simultanément l'espacement entre les éléments coulissants des divers groupes associés aux divers cylindres, en fonction de l'espacement des sièges de soupape de chaque cylindre,
- dans lequel lesdits premier et second moyens de commande (18, 43) sont susceptibles de commander la position selon ladite direction de coulissement (X), par rapport à ladite structure de support (5), respectivement d'une première série (Ai) et d'une seconde série (Bi) d'éléments coulissants qui sont alignés et alternés les uns par rapport aux autres,
- dans lequel les éléments coulissants (Ai) de la première série comprennent un premier élément coulissant (A1) à une extrémité de la série qui est fixé à ladite structure de support (5), un second élément coulissant (A2) à l'extrémité opposée de la série qui est commandé par ledit moyen de commande (18), et un ou plusieurs éléments coulissants intermédiaires (A3, A4) reliés les uns aux autres, ainsi qu'auxdits premier et second éléments coulissants (A1, A2) au moyen d'un mécanisme de liaison pantographe (20), de sorte que chaque déplacement dudit second élément coulissant (A2) entraîne le positionnement desdits éléments coulissants intermédiaires (A3, A4) à des intervalles uniformes entre lesdits premier et second éléments coulissants (A1, A2), et
- dans lequel chaque élément coulissant (Bi) de la seconde série est associé à un élément coulissant respectif (Ai) de la première série par une barre de liaison (29, 30) destinée à ajuster l'espacement entre ces deux éléments coulissants (Ai, Bi) ; ledit second moyen de commande (43) étant conçu pour commander simultanément lesdites barres de liaison (29, 30) associées à tous lesdits éléments coulissants (Bi) de la seconde série.

2. Dispositif selon la revendication 1, caractérisé en ce que ledit second élément coulissant (A2) de ladite première série d'éléments coulissants (Ai) porte un écrou (15) et ledit premier moyen de commande comprend un moteur électrique (18) et une vis (16) coopérant à l'intérieur dudit écrou (15) et entraînée par ledit moteur électrique (18), de façon à provoquer un déplacement dudit second élément coulissant (A2) par rapport à la structure de support (5), ledit mécanisme de liaison pantographe (20) comprenant une pluralité de leviers à genouillère à bras unique (21) montés de façon pivotante sur lesdits éléments coulissants intermédiaires (A3, A4) de la première série et ayant des extrémités libres articulées les unes par rapport aux autres, selon une disposition en zigzag.

3. Dispositif selon la revendication 1, caractérisé en ce que chaque élément coulissant (Bi) de la seconde série est relié à un élément coulissant correspondant (Ai) de la première série par deux leviers (29, 30) articulés à une extrémité par rapport audit élément coulissant (Ai, Bi), à l'autre extrémité par rapport à un élément de commande commun (34) mobile dans une direction (Y) orthogonale à la direction de coulissement (X) desdits éléments coulissants, ledit second moyen de commande comprenant une structure (36) montée de façon coulissante selon ladite direction orthogonale (Y) sur ladite structure de support (5) et reliée de façon rigide audit élément de commande (34) de chacune desdites paires d'éléments coulissants (Ai, Bi), et un moteur électrique (43) destiné à commander ladite structure coulissante (36) par un système à vis et à écrou (40, 41).

4. Dispositif selon la revendication 1, caractérisé en ce que les éléments coulissants des première et seconde séries (Ai, Bi) sont pourvus de patins en forme de C (14, 28) montés de façon coulissante sur deux guides distincts 4a, 4b fixés à ladite structure de support (5).
